(19) Europäisches Patentamt
European Patent Office
Office européen des brevets

(11) EP 1 940 888 B1

(12) **EUROPEAN PATENT SPECIFICATION**

(45) Date of publication and mention of the grant of the patent:
**02.06.2010 Bulletin 2010/22**

(21) Application number: **06807213.1**

(22) Date of filing: **12.10.2006**

(51) Int Cl.:
***C08F 10/06*** *(2006.01)*

(86) International application number:
**PCT/EP2006/067348**

(87) International publication number:
**WO 2007/045600 (26.04.2007 Gazette 2007/17)**

# (54) POLYPROPYLENE RANDOM COPOLYMERS HAVING HIGH MELT FLOW RATES FOR INJECTION MOLDING AND MELT BROWN APPLICATIONS

STATISTISCHE POLYPROPYLENCOPOLYMERE MIT HOHEN SCHMELZFLUSSRATEN FÜR SPRITZGUSS- UND SCHMELZBLASANWENDUNGEN

COPOLYMERES STATIQUES A BASE DE POLYPROPYLENE POSSEDANT DES INDICES DE FLUIDITE ELEVES, DESTINES A DES APPLICATIONS DE MOULAGE PAR INJECTION ET DE FUSION ET SOUFFLAGE

(84) Designated Contracting States:
**AT BE BG CH CY CZ DE DK EE ES FI FR GB GR HU IE IS IT LI LT LU LV MC NL PL PT RO SE SI SK TR**

(30) Priority: **21.10.2005 US 729478 P**

(43) Date of publication of application:
**09.07.2008 Bulletin 2008/28**

(73) Proprietor: **Basell Polyolefine GmbH**
**50389 Wesseling (DE)**

(72) Inventors:
- **FUCHS, Alexander**
  **44100 Ferrara (IT)**
- **NICKLES, RALF**
  **63863 Eschau (DE)**
- **SCHUETZ, BERND**
  **68623 Lampertheim (DE)**

(74) Representative: **Sacco, Marco**
**Basell Poliolefine Italia S.r.l.**
**Intellectual Property**
**P.le Donegani, 12**
**44100 Ferrara (IT)**

(56) References cited:
**WO-A2-02/44260** **WO-A2-2005/005495**
**US-A- 5 741 563** **US-A1- 2003 149 199**

- **"Polypropylene random copolymers having high melt flow rates for injection molding and melt blown applications" February 2006 (2006-02), RESEARCH DISCLOSURE, MASON PUBLICATIONS, HAMPSHIRE, GB , XP007135876 ISSN: 0374-4353 the whole document**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 940 888 B1

## Description

The present invention relates to a polypropylene random copolymer endowed with some features especially suitable for injection molding application and for melt blown and compounding applications.

Polypropylene random copolymer has been used for several years for casting cups and molds. For example in WO 02/44260 a polypropylene having a melt flow rate lower than 100 g/10 min is described for injection molding in particular for the obtainment of contact lenses and other precision application.

However there is still a need for a polypropylene random copolymer-based resin having a balancement of improved properties. In particular when the polypropylene random copolymer-based resin is endowed with a high stiffness, well balanced impact at room temperature and at 0°C, narrow molecular weight distribution, high transparency and good flowability it is fit for the replacement of polystyrene in injection molding application such as the production of cups or other similar objects like plastic cutlery or food containers, where high transparency is required. Products with even higher flowability can be used for melt blown applications as well as for compounding applications.

Therefore an object of the present invention is a polypropylene resin comprising a propylene copolymer said polypropylene resins is endowed with the following features:

a) a propylene copolymer having a melt flow rate (MFR) (ISO 1133) (230°C/2.16 kg) comprised between 90 and 3000 g/10', preferably between 120 and 3000 g/10' and more preferably between 130 and 2500 g/10' measured on the powder;
b) distribution of molecular weight Mw/Mn lower than 4; preferably lower than 3; more preferably lower than 2.5;
c) hexane extractables determined according FDA regulations of less than 2.6 wt.%, more preferred less than 2,0 wt.% even more preferred less than 1.7 wt.% and most preferred less than 1 wt.%
d) xylene solubles of less than 2.2 wt.%, more preferred less than 1.7 wt.%
e) isotactic pentads (mmmm) measured by $^{13}C$-NMR higher than 90%; preferably higher than 92%; more preferably higher than 95% and even more preferably higher than 96%.
f) a propylene copolymer having a melting point measured by DSC higher than 130°C, preferably between 135 and 153°C more preferably between 139 and 153°C and even more preferably between 145°C and 153°C measured on the powder;

with the proviso that the propylene copolymer was not visbroken.

The process for visbreaking a polymer consists in increasing the MFR of the latter by lowering the molecular weight of the polymers by means of chemical reactions such as radical reaction initiated by peroxides. The polymers obtained in this way presents some drawback, such as an high yellowing index, for this reason the polypropylene resin object of the present invention does not contains residues of peroxidic compounds.

Preferably the polypropylene resin of the object of the present invention is further endowed with the following features:

g) haze measured according to ASTM D 1003 (1mm placque) comprised between 5% and 25%; preferably between 7% and 20%; more preferably between 7% and 15%;
h) flexural modulus measured according ISO 178 comprised between 1100 N/m$^2$ and 2000 N/m$^2$; preferably comprised between 1200 N/m$^2$ and 2000 Nm$^2$ and most preferably between 1350 N/m$^2$ and 2000 N/m$^2$.

Preferably the polypropylene resins having a MFR value between 90 and 500 g/10' at 230°C have at a shear rate of 100 1/s at 250°C a viscosity between 100 Pas and 11 Pas, more preferred between 80 Pas and 11 Pas and most preferably between 50 Pas and 1.1 Pas

Preferably the polypropylene resins having a MFR value higher than 500 g/10' at 230°C of the present invention have at a shear rate of 1500 1/s at 250°C a viscosity between 11 Pas and 1 Pas, more preferred between 10 Pas and 1 Pas and most preferably between 7 Pas and 1 Pas

The propylene copolymer of the present invention has preferably a content of 2,1 -insertions lower than 0.5%, more preferred ≤0.3 %. measured by $^{13}C$ NMR spectroscopy. The content of 1,3 insertions is preferably below 0.2 % , more preferred ≤ 0.1 %.

The propylene copolymer of the polypropylene resin object of the present invention is a propylene copolymer containing up to 5% by mol of ethylene or alpha olefins of formula $CH_2$=CHA derived units, wherein A is a $C_2$-$C_{20}$ alkyl radical. Preferably the comonomers used in the propylene copolymers are ethylene or 1-butene. The amount of comonomer in the propylene copolymer ranges preferably from 0.1 % to 4% by mol, more preferably from 0.1% by mol to 3% by mol.

The polypropylene resin of the present invention preferably further comprises customary amounts of customary additives known to those skilled in the art, e.g. stabilizers, lubricants and mold release agents, fillers, nucleating agents,

antistatics, plasticizers, dyes, pigments, antifungal, anti-microbial agents, film cavitating agents or flame retardants. In general, these are incorporated during granulation of the pulverulent product obtained in the polymerization.

Customary stabilizers include antioxidants such as sterically hindered phenols, sterically hindered amines or UV stabilizers, processing stabilizers such as phosphites or phosphonites, acid scavengers such as calcium stearate or zinc stearate or dihydrotalcite, as well as calcium, zinc and sodium caprylate salts. In general, the propylene copolymer compositions of the present invention contain one or more stabilizers in amounts of up to 2% by weight.

Suitable lubricants and mold release agents are, for example, fatty acids, calcium, sodium or zinc salts of fatty acids, fatty acid amides or low molecular weight polyolefin waxes, which are usually used in concentrations of up to 2% by weight.

Possible fillers arc, for example, talc, calcium carbonate, chalk or glass fibers, and these are usually used in amounts of up to 50% by weight.

Examples of suitable nucleating agents are inorganic additives such as talc, silica or kaolin, salts of monocarboxylic or polycarboxylic acids, e.g. sodium benzoate or aluminum tert-butylbenzoate, dibenzylidenesorbitol or its $C_1$-$C_8$-alkyl-substituted derivatives such as methyldibenzylidenesorbitol, ethyldibenzylidenesorbitol or dimethyldibenzylidenesorbitol or salts of diesters of phosphoric acid, e.g. sodium 2,2'-methylenebis(4,6,-di-tert-butylphenyl)phosphate. The nucleating agent content of the propylene copolymer composition is generally up to 5% by weight.

Such additives arc generally commercially available and are described, for example, in Gächter/Müller, Plastics Additives Handbook, 4th Edition, Hansa Publishers, Munich, 1993.

When the MFR of the polypropylene resin of the present invention is lower than 200 g/10' it can contain from 0.03 to 1% by weight, preferably from 0.05 to 0.25% by weight, of a nucleating agent, in particular dibenzylidenesorbitol or a dibenzylidenesorbitol derivative, particularly preferably dimethyldibenzylidenesorbitol.

Furthermore the addition of glyceryl monostearate (tradenames for these products are Loxiol EP 55, Atmer 122, Baerolub MS 90 or Atmer 129) is preferred in the present invention. The range contains from 0.05% by weight to 0.6% by weight, more preferred from 0.1 % to 0.4% by weight.

The polypropylene resin object of the present invention is particularly suitable to be used for injection molding. For example the polypropylene resin of the present invention can be advantageously used for obtaining cups or other similar tools. In particular the value of IZOD at low temperature (0˚C), makes the resin of the present invention particularly suitable for injection molding applications

Thus a further object of the present invention is the use of the propylene resin described above for the production of molded articles.

A further object of the present invention are molded article obtained by using the propylene resin objectof the present invention.

The random propylene copolymer of the propylene resin object of the present invention can be obtained by using a metallocene-based catalyst system.

In particular said propylene copolymer is obtainable by using a catalyst system obtainable by contacting:

a) a metallocene compound of formula (I)

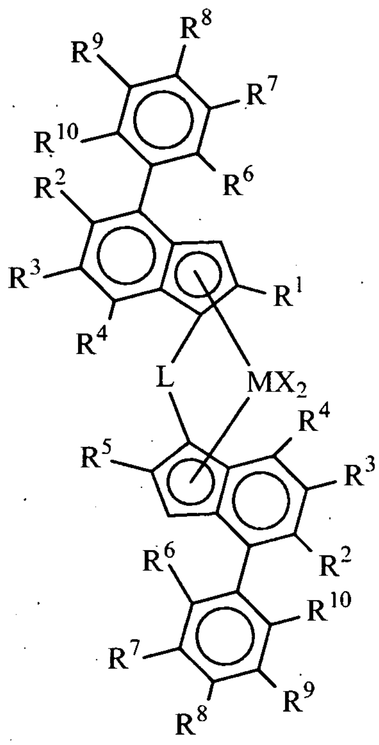

(I)

wherein

M is a transition metal belonging to group 3, 4, 5, 6 or to the lanthanide or actinide groups in the Periodic Table of the Elements; preferably M is titanium, zirconium or hafnium;

X, same or different, is a hydrogen atom, a halogen atom, or a R, OR, $OSO_2CF_3$, OCOR, SR, $NR_2$ or $PR_2$ group, wherein R is a are linear or branched, cyclic or acyclic, $C_1$-$C_{40}$-alkyl, $C_2$-$C_{40}$ alkenyl, $C_2$-$C_{40}$ alkynyl, $C_6$-$C_{40}$-aryl, $C_7$-$C_{40}$-akylaryl or $C_7$-$C_{40}$-arylalkyl radicals; optionally containing heteroatoms belonging to groups 13-17 of the Periodic Table of the Elements; preferably R is a linear or branched $C_1$-$C_{20}$-alkyl radical; or two X can optionally form a substituted or unsubstituted butadienyl radical or a OR'O group wherein R' is a divalent radical selected from $C_1$-$C_{40}$ alkylidene, $C_6$-$C_{40}$ arylidene, $C_7$-$C_{40}$ alkylarylidene and $C_7$-$C_{40}$ arylalkylidene radicals; preferably X is a hydrogen atom, a halogen atom or a R group; more preferably X is chlorine or a $C_1$-$C_{10}$-alkyl radical; such as methyl, or ethyl radicals; L is a divalent $C_1$-$C_{40}$ hydrocarbon radical optionally containing heteroatoms belonging to groups 13-17 of the Periodic Table of the Elements or a divalent silylidene radical containing up to 5 silicon atom; preferably L is a divalent bridging group selected from $C_1$-$C_{40}$ alkylidene, $C_3$-$C_{40}$ cycloalkylidene, $C_6$-$C_{40}$ arylidene, $C_7$-$C_{40}$ alkylarylidene, or $C_7$-$C_{40}$ arylalkylidene radicals optionally containing heteroatoms belonging to groups 13-17 of the Periodic Table of the Elements, and silyliene radical containing up to 5 silicon atoms such as $SiMe_2$, $SiPh_2$; preferably L is a group $(Z(R'')_2)_n$ wherein Z is a carbon or a silicon atom, n is 1 or 2 and R'' is a $C_1$-$C_{20}$ hydrocarbon radical optionally containing heteroatoms belonging to groups 13-17 of the Periodic Table of the Elements; preferably R'' is a linear or branched, cyclic or acyclic, $C_1$-$C_{20}$-alkyl, $C_2$-$C_{20}$ alkenyl, $C_2$-$C_{20}$ alkynyl, $C_6$-$C_{20}$-aryl, $C_7$-$C_{20}$-alkylaryl or $C_7$-$C_{20}$-arylalkyl radicals optionally containing heteroatoms belonging to groups 13-17 of the Periodic Table of the Elements; more preferably the group $(Z(R'')_2)_n$ is $Si(CH_3)_2$, $SiPh_2$, SiPhMe, $SiMe(SiMe_3)$, $CH_2$, $(CH_2)_2$, and $C(CH_3)_2$; even more preferably $(Z(R'')_2)_n$ is $Si(CH_3)_2$.

$R^1$ and $R^5$ are a $C_1$-$C_{40}$ hydrocarbon radical optionally containing heteroatoms belonging to groups 13-17 of the Periodic Table of the Elements; preferably $R^1$ and $R^5$ are linear or branched, cyclic or acyclic, $C_1$-$C_{40}$-alkyl, $C_2$-$C_{40}$ alkenyl, $C_2$-$C_{40}$ alkynyl, $C_6$-$C_{40}$-aryl, $C_7$-$C_{40}$-alkylaryl or $C_7$-$C_{40}$-arylalkyl radicals; optionally containing heteroatoms belonging to groups 13-17 of the Periodic Table of the Elements; more preferably $R^1$ and $R^5$ are a linear or branched, saturated or unsaturated $C_1$-$C_{20}$-alkyl radical;

$R^2$, $R^3$ and $R^4$, equal to or different from each other, are hydrogen atoms or $C_1$-$C_{40}$ hydrocarbon radicals optionally containing heteroatoms belonging to groups 13-17 of the Periodic Table of the Elements; preferably $R^2$, $R^3$ and $R^4$, equal to or different from each other are hydrogen atoms or linear or branched, cyclic or acyclic, $C_1$-$C_{40}$-akyl, $C_2$-$C_{40}$ alkenyl, $C_2$-$C_{40}$ alkynyl, $C_6$-$C_{40}$-aryl, $C_7$-$C_{40}$-alkylaryl or $C_7$-$C_{40}$-arylalkyl radical; optionally containing heteroatoms

belonging to groups 13-17 of the Periodic Table of the Elements; more preferably $R^2$, $R^3$ and $R^4$ are hydrogen atoms or $C_1$-$C_{20}$-alkyl radicals;

$R^6$, $R^7$, $R^8$, $R^9$, and $R^{10}$ equal to or different from each other, are hydrogen atoms or $C_1$-$C_{40}$ hydrocarbon radicals optionally containing heteroatoms belonging to groups 13-17 of the Periodic Table of the Elements; preferably $R^2$, $R^3$ and $R^4$, equal to or different from each other are hydrogen atoms or linear or branched, cyclic or acyclic, $C_1$-$C_{40}$-alkyl, $C_2$-$C_{40}$ alkenyl, $C_2$-$C_{40}$ alkynyl, $C_6$-$C_{40}$-aryl, $C_7$-$C_{40}$-alkylaryl or $C_7$-$C_{40}$-arylakyl radical; optionally containing heteroatoms belonging to groups 13-17 of the Periodic Table of the Elements; more preferably $R^2$, $R^3$ and $R^4$ are hydrogen atoms or $C_1$-$C_{40}$-alkyl radicals; with the proviso that at least one among $R^6$, $R^7$, $R^8$, $R^9$, and $R^{10}$ is different from an hydrogen atom; preferably $R^6$, $R^7$, $R^9$, and $R^{10}$ $R^8$ are hydrogen atoms;

preferably $R^8$ is a $C_1$-$C_{40}$-akyl radicals, more preferably $R^8$ is a $C_1$-$C_{40}$-alkyl radical wherein the atom in the alpha position is a secondary carbon or a tertiary carbon, such as isopropyl or tertbutyl radicals;

b) at least an alumoxane or a compound able to form an alkylmetallocene cation; and

c) optionally an organo aluminum compound.

Preferably the substituent $R^1$ is a linear $C_1$-$C_{20}$-alkyl radical such as methyl or ethyl radicals and the substituent $R^5$ is a branched $C_1$-$C_{20}$-alkyl radical, preferably the substituent $R^5$ is a branched $C_1$-$C_{20}$-alkyl radical wherein the carbon atom in the alpha position is a secondary or a tertiary carbon atom, such as an isopropyl radical.

Alumoxanes used as component b) in the catalyst system according to the present invention can be obtained by reacting water with an organo-aluminium compound of formula $H_jAlU_{3-j}$ or $H_jAl_2U_{6-j}$, where the U substituents, same or different, are hydrogen atoms, halogen atoms, C1-$C_{20}$-alkyl, $C_3$-$C_{20}$-cyclalkyl, $C_6$-$C_{20}$-aryl, $C_7$-$C_{20}$-alkylaryl or $C_7$-$C_{20}$-arylakyl radicals, optionally containing silicon or germanium atoms, with the proviso that at least one U is different from halogen, and j ranges from 0 to 1, being also a non-integer number. In this reaction the molar ratio of Al/water is preferably comprised between 1:1 and 100:1.

The alumoxanes used in the process according to the invention are considered to be linear, branched or cyclic compounds containing at least one group of the type:

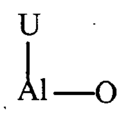

wherein the substituents U, same or different, are defined above.

In particular, alumoxanes of the formula:

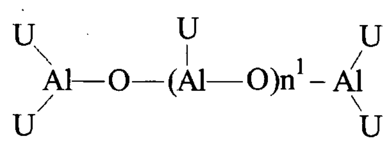

can be used in the case of linear compounds, wherein $n^1$ is 0 or an integer of from 1 to 40 and the substituents U are defined as above; or alumoxanes of the formula:

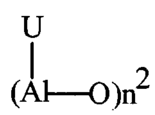

can be used in the case of cyclic compounds, wherein $n^2$ is an integer from 2 to 40 and the U substituents are defined as above.

Examples of alumoxanes suitable for use according to the present invention are methylalumoxane (MAO), tetra-(isobutyl)alumoxane (TIBAO), tetra-(2,4,4-trimethyl-pentyl)alumoxane (TIOAO), tetra-(2,3-dimethylbutyl)alumoxane (TDMBAO) and tetra-(2,3,3-trimethylbutyl)alumoxane (TTMBAO)..

Particularly interesting cocatalysts are those described in WO 99/21899 and in WO01/21674 in which the alkyl and aryl groups have specific branched patterns.

Non-limiting examples of aluminium compounds that can be reacted with water to give suitable alumoxanes

(b), described in WO 99/21899 and WO01/21674, are:

tris(2,3,3-trimethyl-butyl)aluminium, tris(2,3-dimethyl-hexyl)aluminium, tris(2,3-dimethylbutyl)aluminium, tris(2,3-dimethyl-pentyl)aluminium, tris(2,3-dimethyl-heptyl)aluminimn, tris(2-methyl-3-ethyl-pentyl)aluminium, tris(2-methyl-3-ethyl-hexyl)aluminium, tris(2-methyl-3-ethyl-heptyl)aluminium, tris(2-methyl-3-propyl-hexyl)aluminium, tris(2-ethyl-3-methylbutyl)aluminium, tris(2-ethyl-3-methyl-pentyl)aluminium, tris(2,3-diethyl-pentyl)aluminium, tris(2-propyl-3-methyl-butyl)aluminium, tris(2-isopropyl-3-methyl-butyl)aluminium, tris(2-isobutyl-3-methyl-pentyl)aluminium, tris(2,3,3-trimethyl-pentyl)aluminium, tris(2,3,3-trimethyl-hexyl)aluminium, tris(2-ethyl-3,3-dimethyl-butyl)aluminium, tris(2-ethyl-3,3-dimethylpentyl)aluminium; tris(2-isopropyl-3,3-dimethyl-butyl)aluminium, tris(2-trimethylsilyl-propyl)aluminium, tris(2-methyl-3-phenyl-butyl)aluminium, tris(2-ethyl-3-phenyl-butyl)aluminium, tris(2,3-dimethyl-3-phenyl-butyl)aluminium, tris(2-phenyl-propyl)aluminium, tris[2-(4-fluorophenyl)-propyl]aluminium, tris[2-(4-chlorophenyl)-propyl]aluminium, tris[2-(3-isopropyl-phenyl)-propyl]aluminium, tris(2-phenyl-butyl)aluminium, tris(3-methyl-2-phenyl-butyl)aluminium, tris(2-phenyl-pentyl)aluminium, tris[2-(pentafluorophenyl)-propyl]aluminium, tris[2,2-diphenylethyl]aluminium and tris[2-phenyl-2-methyl-propyl]aluminium, as well as the corresponding compounds wherein one of the hydrocarbyl groups is replaced with a hydrogen atom, and those wherein one or two of the hydrocarbyl groups are replaced with an isobutyl group.

Among the above aluminium compounds, trimethylaluminium (TMA), triisobutylaluminium (TIBA), tris(2,4,4-trimethyl-pentyl)aluminium (TIOA), tris(2,3-dimethylbutyl)aluminium (TDMBA) and tris(2,3,3-trimethylbutyl)aluminium (TTMBA) are preferred.

Non-limiting examples of compounds able to form an alkylmetallocene cation are compounds of formula $D^+E^-$, wherein $D^+$ is a Brønsted acid, able to donate a proton and to react irreversibly with a substituent X of the metallocene of formula (I) and $E^-$ is a compatible anion, which is able to stabilize the active catalytic species originating from the reaction of the two compounds, and which is sufficiently labile to be removed by an olefinic monomer. Preferably, the anion E- comprises one or more boron atoms. More preferably, the anion $E^-$ is an anion of the formula $BAr_4^{(-)}$, wherein the substituents Ar which can be identical or different are aryl radicals such as phenyl, pentafluorophenyl or bis(trifluoromethyl)phenyl. Tetrakis-pentafluorophenyl borate is particularly preferred compound, as described in WO 91 /02012. Moreover, compounds of formula $BAr_3$ can be conveniently used. Compounds of this type are described, for example, in the International patent application WO 92/00333. Other examples of compounds able to form an alkylmetallocene cation are compounds of formula $BAr_3P$ wherein P is a substituted or unsubstituted pyrrol radical. These compounds are described in WO01/62764. Compounds containing boron atoms can be conveniently supported according to the description of DE-A-19962814 and DE-A-19962910. All these compounds containing boron atoms can be used in a molar ratio between boron and the metal of the metallocene comprised between about 1:1 and about 10:1; preferably 1:1 and 2.1; more preferably about 1:1.

Non limiting examples of compounds of formula $D^+E^-$ are:

Triethylammoniumtetra(phenyl)borate,
Tributylammoniumtetra(phenyl)borate,
Trimethylammoniumtetra(tolyl)borate,
Tributylammoniumtetra(tolyl)borate,
Tributylammoniumtetra(pentafluorophenyl)borate,
Tributylammoniumtetra(pentafluorophenyl)aluminate,
Tripropylammoniumtetra(dimethylphenyl)borate,
Tributylammoniumtetra(trifluoromethylphenyl)borate,
Tributylammoniumtetra(4-fluorophenyl)borate,
N,N-Dimethylbenzylammonium-tetrakispentafluorophenylborate,
N,N-Dimethylhexylamonium-tetrakispentafluorophenylborate,
N,N-Dimethylaniliniumtetra(phenyl)borate,
N,N-Diethylaniliniumtetra(phenyl)borate,
N,N-Dimethylaniliniumtetrakis(pentafluorophenyl)borate,
N,N-Dimethylaniliniumtetrakis(pentafluorophenyl)aluminate,
N,N-Dimethylbenzylammonium-tetrakispentafluorophenylborate,
N,N-Dimethylhexylamonium-tetrakispentafluorophenylborate,
Di(propyl)ammoniumtetrakis(pentafluorophenyl)borate,
Di(cyclohexyl)ammoniumtetrakis(pentafluorophenyl)borate,
Triphenylphosphoniumtetrakis(phenyl)borate,
Triethylphosphoniumtetrakis(phenyl)borate,
Diphenylphosphoniumtetrakis(phenyl)borate,

Tri(methylphenyl)phosphoniumtetrakis(phenyl)borate,
Tri(dimethylphenyl)phosphoniumtetrakis(phenyl)borate,
Triphenylcarbeniumtetrakis(pentafluorophenyl)borate,
Triphenylcarbeniumtetrakis(pentafluorophenyl)aluminate,
Triphenylcarbeniumtetrakis(phenyl)aluminate,
Ferroceniumtetrakis(pentafluorophenyl)borate,
Ferroceniumtetrakis(pentafluorophenyl)aluminate.
Triphenylcarbeniumtetrakis(pentafluorophenyl)borate, and
N,N-Dimethylaniliniumtetrakis(pentafluorophenyl)borate.

Additional examples of compounds of formula $D^+E^-$ that can be used according to the present invention are described in WO 04/005360, WO 02/102811 and WO 01/62764.

Organic aluminum compounds used as compound c) are those of formula $H_jAlU_{3-j}$ or $H_jAl_2U_{6-j}$ as described above.

The catalysts described above can also be supported on an inert carrier. This is achieved by depositing the metallocene compound a) or the product of the reaction thereof with the component b), or the component b) and then the metallocene compound a) on an inert support such as, for example, silica, alumina, Al-Si, Al-Mg mixed oxides, magnesium halides, styrene/divinylbenzene copolymers, polyethylene or polypropylene. The supportation process is carried out in an inert solvent such as hydrocarbon for example toluene, hexane, pentane or propane and at a temperature ranging from 0˚C to 100˚C, preferably the process is carried out at room temperature.

A suitable class of supports which can be used is that constituted by porous organic supports functionalized with groups having active hydrogen atoms. Particularly suitable are those in which the organic support is a partially crosslinked styrene polymer. Supports of this type are described in European application EP-633 272.

Another class of inert supports particularly suitable for use according to the invention is that of polyolefin porous prepolymers, particularly polyethylene.

A further suitable class of inert supports for use according to the invention is that of porous magnesium halides such as those described in International application WO 95/32995.

The solid compound thus obtained, in combination with the further addition of the alkylaluminium compound either as such or prereacted with water if necessary, can be usefully employed in the gas-phase polymerization.

The following examples arc given for illustrative purpose and do not intend to limit the invention.

**Examples**

**Analysis**

All data was obtained according to the following methods:

$^{13}$C-NMR

*NMR analysis.* 13C-NMR spectra of PP were acquired on a DPX-400 spectrometer operating at 100.61 MHz in the Fourier transform mode at 120 ˚C. The peak of the *mmmm* pentad carbon were used as internal reference at 21.8 ppm and 29.9 ppm respectively. The samples were dissolved in 1,1,2,2-tetrachloroethane-*d2* at 120 ˚C with a 8% wt/v concentration in a 5mm tube. Each spectrum was acquired with a 90˚ pulse, 12 seconds of delay between pulses and CPD (WALTZ 16) to remove 1H-13C coupling. About 2500 transients were stored in 32K data points using a spectral window of 6000 Hz.

The assignments of PP spectra were made according to "Selectivity in Propylene Polymerization with Metallocene Catalysts", L. Resconi, L. Cavallo, A. Fait, F. Piemontesi, Chem. Rev., 100, 1253, (2000))

The *mmmm* content was obtained modelling the experimental pentad distribution with the enantiomorphic site model. The *mmmm* content of PP with high content of 2,1 (E) and 1,3 (H) errors was obtained as:

$$[mmmm] = 100\ (\Sigma[CH3]-5[mrrm]-5[E]-5[H])\ /\ (\Sigma[CH3])$$

where $\Sigma$[CH3] is the sum of all CH3 groups

The content of 2,1 and 3,1 errors was obtained as:

$$[E] = 100\ (E_9/\Sigma[CH_2])$$

$$[H] = 100\ (0.5\ H_2/\Sigma[CH_2])$$

where $E_9$ is the peak at 42.14 ppm, $H_2$ is the peak at 30.82 ppm and $\Sigma[CH_2]$ is the sum of all $CH_2$ groups.

Ethylene content IR

Calibration is obtained by analyzing propylene/ethylene standard copolymers.

Sample preparation

By means of a hydraulic press, a sample film was molded between two aluminium foils at about 170°C and a pressure of 10 kg/cm$^2$ for about a minute. The pressure is then realased and the sample was cooled at room temperature. The film thickness is determined according to the following table.

| Ethylene forecast (% wt) | Thickens mm |
|---|---|
| <2 | 0.5-1 |
| 2-5 | 0.3-0.5 |
| 5-10 | 0.1-0.3 |
| 10-25 | 0.1 |

The IR spectra is then recorded by using a FTIR apparatus. The ethylene content is then calculated according to the following formula

$$\%\ \text{ethylene (Wt)} = A/(At.G)$$

wherein
G is the slope of the calibration straight line .
A is the area of the band due to the methylenic sequences vs. a baseline plotted between the ends of the 790-660 cm$^{-1}$ range, after subtraction of the isotactic polypropylene reference spectrum from the sample spectrum in the same spectral range.
At is the area of the combination band of the sample spectrum between 4482 and 3950 cm$^{-1}$ vs. a baseline plotted between the ends of the range.

Molecular weights and MWD

Molecular weights and molecular weight distribution were measured at 145°C using a Alliance GPCV 2000 instrument (Waters) equipped with three mixed-bed columns TosoHaas TSK GMHXL-HT having a particle size of 13 $\mu$m. The dimensions of the columns were 300 × 7.8 mm. The mobile phase used was vacuum distilled 1,2,4-Trichlorobenzene (TCB) and the flow rate was kept at 1.0 ml/min. The sample solution was prepared by heating the sample under stirring at 145°C in TCB for two hours. The concentration was 1 mg/ml. To prevent degradation, 0.1 g/l of 2,6-diterbutyl-p-cresol were added. 326.5 $\mu$L of solution were injected into the column set. A calibration curve was obtained using 10 polystyrene standard samples (EasiCal kit by Polymer Laboratories) with molecular weights in the range from 580 to 7500000; additionally two other standards with peak molecular weight of 11600000 and 13200000 from the same manufacturer were included. It was assumed that the K values of the Mark-Houwink relationship were:

$$K = 1.21 \times 10^{-4}\ \text{dL/g and } \alpha = 0.706 \text{ for the polystyrene standards}$$

$$K = 1.90\times 10^{-4}\ dL/g \text{ and } \alpha = 0.725 \text{ for the polypropylene samples}$$

$$K = 1.93\times 10^{-4}\ dL/g \text{ and } \alpha = 0.725 \text{ for the random copolymer samples}$$

A third order polynomial fit was used for interpolate the experimental data and obtain the calibration curve. Data acquisition and processing was done by using Empower 1.0 with GPCV option by Waters.

Intrinsic viscosity:

Intrinsic viscosity was measured in tetrahydronaphtalene (THN) solution obtained by dissolving the polymer at 135°C for 1 hour.

FDA hexane extractables

Code of Federal Regulations, Title 21, Volume 3, Revised as of April 1, 2004, CITE: 21 CFR 177.1520

The hexane extractables of the rancomcopolymers were measured under the same conditions used for homopolymers (hexane under reflux)

Xylene-soluble faction

2.5 g of polymer and 250 mL of o-xylene are introduced in a glass flask equipped with a refrigerator and a magnetical stirrer. The temperature is raised in 30 minutes up to the boiling point of the solvent. The so obtained solution is then kept under reflux and stirring for further 30 minutes. The closed flask is then kept for 30 minutes in a bath of ice and water and in thermostatic water bath at 25°C for 30 minutes as well. The solid thus obtained is filtered on quick filtering paper and 100 ml of the filtered liquid is poured in a previously weighed aluminum container, which is heated on a heating plate under nitrogen flow, to remove the solvent by evaporation. The container is then kept on an oven at 80°C under vacuum until constant weight is obtained. The residue is weighed to determine the percentage of xylene-soluble polymer.

Melt flow rate (MFR)

Determined according to ISO 1133 (230°C, 2.16 Kg).

The ISO norm describes the procedure of measuring the MFR values til 150 g/10'. To measure the MFR value of products with higher MFR (up to ca. 3000 g/10') the unmodified procedure was applied.

Rheological measurements/ shear viscosity:

Determined according ISO 11443. Measurements were performed with a Goettfert Rheograph 2002 Capillary Rheometer at 3 differerent temperatures (200°C, 230°C and 250°C). Capillary length /diameter (L/D) ratio was 40 (length 20 mm, diameter 0.5 mm). Entrance angle 180°
Following abbreviations were used:

gr (1/s): shear rate
tapp (Pa): shear stress
hrc (Pas): viscosity
the viscosity at 100 1/s (250°C) for products having a nominal MFR between 90 and ca. 500 g/10' at 230°C and the viscosity at shear rates of 1500 1/s for products higher than 500g/10' at 230°C have to be considered.

Flexural modulus

Determined according to ISO 178

IZOD Impact Strength

Determined according to ISO 180/1A

Stress and Elongation at yield and at break

Determined according to ISO 527

Melting temperature, melting enthalpy (ΔHm), crystallization temperature and crystallization enthalpy (ΔHc) determined by DSC according ISO 3146 with a heating rate of 20K per minute Haze

Determined according ASTM D 1003

Gloss

Determined according ASTM 2457 (what means ASTM 523) at 45˚ and 60˚.

**Preparation of polypropylene resins**

The catalyst system is prepared as described in PCT/EP2004/007061 by using rac-dimethylsilylene(2-methyl-4(4'tertbutyl-penhyl)-indenyl) (2-isopropyl-4(4'tertbutyl-penhyl)-indenyl)zirconium dichloride prepared as described in US 2003/0149199 instead of rac-dimethylsilylbis(2-methyl-4, 5-benzo-indenyl)-zirconium dichloride.

**Propylene polymerization**

The catalyst system in the form of catalyst mud obtained as described in PCT/EP2004/007061 is fed in the precontact vessel in which it is diluted with about 5 (Kg/h) of propane. From the precontact vessel the catalyst system is fed to the prepolymerization loop in which propylene is fed at the same time according to the data reported in table 1. The residence time of the catalyst in the prepolymerization loop is about 8 minutes. The prepolymerized catalyst obtained in the prepolymerization loop is then continuously feed into the first loop reactor wherein propylene, ethylene and hydrogen were feed according to table 1. The polymer is discharged from the first loop reactor, separated from the unreacted monomer and dried. The reaction conditions are reported in table 1. The MFR of the product is controlled via the feed of hydrogen.

Table 1

| Ex | Prepolymerization | | | | |
|---|---|---|---|---|---|
| | temperature (˚C) | $C_3$ (Kg/h) | $C_2$ (Kg/h) | $H_2$ (ppm (mol)) | temperature (˚C) |
| 1 | 45 | 336 | 2,2 | 275 | 70 |
| 2 | 45 | 336 | 3,1 | 275 | 70 |
| 3 | 45 | 340 | 4 | 285 | 70 |

MFR and $C_2$ values were measured on the powder
Example 1: MFR 150 g/10', 1.5 wt.% ethylene content (IR)
Example 2: MFR 110 g/10', 1.8 wt.% ethylene content (IR)
Example 3: MFR 132 g/10', 2.3 wt.% ethylene content (IR)

**Preparation of the polypropylene resins according the invention**

For the measurement of the optical and mechanical data, the polymer powder from Example 1 to 3 was additivated and melt mixed with a Berstdorff ZE25 respective Wemer& Pfleiderer ZSK53 twin screw extruder according following tables (2 and 3) and pelletized.: The temperature on diverese temperature zones represents the measured.values. The setpoints have to be chosen ca 10-20˚C higher and are common knowledge for the extrusion processing to persons skilled in the art.

Table 2:

| Sample | | Example 4 | Example 5 | Example 6 | Example 7 |
|---|---|---|---|---|---|
| | | | | | |
| Extmder | Unit | ZE25 | ZE25 | ZE25 | ZE25 |
| | | | | | |
| Irganox B215 | ppm | 1500 | 1500 | 1500 | 1500 |
| Calciumstearate | ppm | 500 | 500 | 500 | 500 |
| Millad 3988 | ppm | 1800 | 1800 | - | 1800 |
| NA 21 | ppm | - | - | 1800 | |
| Polymer powder MFR 150 (Example 1) | % | 99,62 | - | - | - |
| Polymer powder MFR 110 (Example 2) | % | - | 99,62 | - | - |
| Polymer Powder MFR 132 (Example 3) | % | - | - | 99,62 | 99,62 |

The pelletized material was injection moulded (ISO 1873/2). The production of the test specimens required for use related tests and the tests themselves were carried out in accordance with the standards indicated in table 3

Table 3

| | | | Example 4 | Example 5 | Example 6 | Example 7 |
|---|---|---|---|---|---|---|
| Method | | | | | | |
| ASTM D 1003 | HAZE (1 MM) | % | 10,3 | 8,2 | 20,4 | 9,2 |
| ASTM 2457 / D523 | GLOSS (placque 1 mm) (60’) | % | 131,3 | 134,1 | 116,7 | 133;2 |
| ASTM 2457 / D523 | GLOSS (placque 1mm) 45’ | % | 81,5 | 82,8 | 73,9 | 82,7 |
| ISO 180/1A | IZOD 23˚C /48h | KJ/M2 | 3,3 | 4 | 3,5 | 3,6 |
| ISO 180/1A | IZOD 0˚C /48h | KJ/M2 | 1,4 | 1,8 | 2,1 | 2 |
| ISO 178 | Flexual Modulus /48h | N/MM 2 | 1591 | 1448 | 1371 | 1396 |
| ISO 527 | Tensile Modulus /48h | N/MM 2 | 1490 | 1426 | 1343 | 1362 |
| ISO 527 | Stress at Yield /48h | N/MM 2 | 35,5 | 33,6 | 32,4 | 32,6 |
| ISO 527 | Elongation at Yield /48h | % | 10,3 | 11,2 | 11,6 | 11,6 |
| ISO 527 | Stress at Break /48h | N/MM 2 | 31,2 | 21 | 16,8 | 16,8 |
| ISO 527 | Elongation at Break /48h | % | 22 | 252 | 365 | 90 |
| ISO 1133 | Melt Flow Rate | g/10min | 150 | 90,3 | 136 | 137 |
| ISO 3146 | Hc | J/g | -93,7 | -88,1 | -85,3 | -84,5 |
| ISO3146 | Hm | J/g | 97,2 | 91 | 87,8 | 87,4 |
| ISO 3146 | Tm | ˚C | 146,5 | 143,9 | 141,5 | 141,3 |
| ISO 3146 | Tc | ˚C | 112,3 | 109,5 | 106,2 | 107,5 |
| | Ethylene content (IR) | % | 1,6 | 2,6 | 2,1 | 2,9 |
| | Intrinsic viscosity | dl/g | 0,82 | 1 | see. Ex. 7 | 0,86 |
| | Xylene solubles | % | 2 | 1,3 | 1,4 | 1,5 |
| FDA | Hexane extractables, 100 u film | % | | | | 0,7 |

(continued)

| | | | Example 4 | Example 5 | Example 6 | Example 7 |
|---|---|---|---|---|---|---|
| Method | | | | | | |
| | Mn(GPC) | g/mol | 47604 | 53411 | see. Ex. 7 | 48760 |
| | Mw(GPC) | g/mol | 121801 | 135142 | see. Ex. 7 | 122931 |
| | Mw/Mn | | 2,6 | 2,5 | see. Ex. 7 | 2,5 |
| n.m. : not measured<br>$^{13}$ C-NMR measurements (measured on example 4 and 5) showed for the mmmm pentades 972%, 2.1 insertions <=0.2% and 1.3 insertions <0.1%. The ethylene content of Example 4 was lwt.%, the ethylene content of example 5 1,5 wt.%.<br>As the measurement of products with very high Melt flow rate results sometimes in problems with reproducible values, the melt viscosity was determined according ISO 11443 at three different temperatures (200˚C; 230˚C and 250˚C) (table 4 and table 5) | | | | | | |

Table 4:

| Example 4 | | | | | | | | |
|---|---|---|---|---|---|---|---|---|
| | | melt viscosity | | | melt viscosity | | | melt viscosity |
| **200˚C** | | | **230˚C** | | | **250˚C** | | |
| **$g_{rc}$ ($s^{-1}$)** | **$t_{app}$ (Pa)** | **$h_{rc}$ (Pa*s)** | **$g_{rc}$ ($s^{-1}$)** | **$t_{app}$ (Pa)** | **$h_{rc}$(Pa*s)** | **$g_{rc}$ ($s^{-1}$)** | **$t_{app}$ (Pa)** | **$h_{rc(}$Pa*s)** |
| 3966,0 | 84422,3 | 21,3 | 8028,8 | 83811,7 | 10,4 | 16124,4 | 103200,0 | 6,4 |
| 1888,9 | 60607,0 | 32,1 | 3797,7 | 60759,6 | 16,0 | 7721,6 | 75720,6 | 9,8 |
| 894,3 | 40913,5 | 45,8 | 1801,3 | 41371,5 | 23,0 | 3676,5 | 52363,2 | 14,2 |
| 426,3 | 26105,3 | 61,2 | 861,1 | 26563,3 | 30,8 | 1766,4 | 34959,7 | 19,8 |
| 205,5 | 15724,2 | 76,5 | 414,6 | 16029,6 | 38,7 | 851,0 | 21983,4 | 25,8 |
| 100,3 | 9007,1 | 89,8 | 203,8 | 9617,7 | 47,2 | 409,6 | 12823,6 | 31,3 |
| 49,2 | 4885,2 | 99,3 | 99,8<br>49,3 | 5343,2<br>2900,6 | 53,5<br>58,9 | 202,3<br>99,7 | 7633,1<br>4274,6 | 37,7<br>42,9 |
| | | | | | | 49,2 | 2289,9 | 46,6 |

Table 5:

| Example 7 | | | | | | | | |
|---|---|---|---|---|---|---|---|---|
| | | melt viscosity | | | melt viscosity | | | melt viscosity |
| **200** | | | **230** | | | **250** | | |
| **$g_{rc}$($S^{-1}$)** | **$t_{app}$ (Pa)** | **$h_{rc}$(Pa*s)** | **$g_{rc}$ ($s^{-1}$)** | **$t_{app}$ (Pa)** | **$h_{rc(}$Pa*s)** | **$g_{rc}$ ($s^{-1}$)** | **$t_{app}$ (Pa)** | **$h_{rc(}$Pa*s)** |
| 4065,9 | 89307,5 | 22,0 | 8017,8 | 89612,8 | 11,2 | 34681,3 | 139533,0 | 4,0 |
| 1909,6 | 64576,2 | 33,8 | 3824,2 | 65034,2 | 17,0 | 16579,7 | 107780,0 | 6,5 |
| 903,3 | 44424,8 | 49,2 | 1816,4 | 44577,4 | 24,5 | 7895,5 | 80147,8 | 10,2 |
| 429,9 | 28547,9 | 66,4 | 867,6 | 29005,9 | 33,4 | 3744,2 | 56332,4 | 15,0 |
| 207,8 | 17556,2 | 84,5 | 417,8 | 17861,5 | 42,8 | 1782,1 | 37555,0 | 21,1 |
| 100,9 | 10075,7 | 99,8 | 203,5 | 10533,7 | 51,8 | 854,9 | 23815,3 | 27,9 |

(continued)

| Example 7 | | | | | | | | |
|---|---|---|---|---|---|---|---|---|
| | | melt viscosity | | | melt viscosity | | | melt viscosity |
| 200 | | | 230 | | | 250 | | |
| **$g_{rc}(S^{-1})$** | **$t_{app}$ (Pa)** | **$h_{rc}$(Pa*s)** | **$g_{rc}$ ($s^{-1}$)** | **$t_{app}$ (Pa)** | **$h_{rc(}$Pa*s)** | **$g_{rc}$ ($s^{-1}$)** | **$t_{app}$ (Pa)** | **$h_{rc(}$Pa*s)** |
| 49,7 | 5648,5 | 113,7 | 99,9 | 5953,8 | 59,6 | 411,9 | 14197,6 | 34,5 |
| | | | 49,2 | 3205,9 | 65,2 | 203,2 | 8549,1 | 42,1 |
| | | | | | | 100,4 | 4885,2 | 48,7 |
| | | | | | | 49,3 | 2595,3 | 52,7 |

**Comparative Examples 8,9, 10,11**

The polymerization according example 1 was repeated by applying the parameters shown in table 6:

Table 6:

| Comparative Example | Prepolymerization | | | | |
|---|---|---|---|---|---|
| | temperature (˚C) | $C_3$ (Kg/h) | $C_2$ (Kg/h) | $H_2$ (ppm (mol)) | temperature (˚C) |
| 8 | 45 | 336 | 2,2 | 77 | 70 |
| 9 | 45 | 340 | 0 | 320 | 70 |
| Following MFR and ethylene content were measured on the powder<br>Comparative Example 8: MFR 8 g/10', 1.6 wt.% ethylene content (IR)<br>Comparative Example 9: MFR 149 g/10' (homopolymer) | | | | | |

For the comparative examples polymer powder according the following tables was additivated (table 7) and extruded.

Table 7

| Sample | | **Comparative Example 10** | **Comparative Example 11** |
|---|---|---|---|
| | | | |
| Extruder | Unit | ZE25 | ZE25 |
| | | | |
| Irganox B215 | ppm | 1500 | 1500 |
| Calciumstearate | ppm | 500 | 500 |
| Millad 3988 | ppm | 1800 | 2000 |
| Polymer powder MFR 8 (Comparative Example 8) | % | 99,62 | - |
| Polymer powder MFR 150 (Comparative Example 9) | % | - | 99,62 |

The pelletized material was injection moulded (ISO 1873/2). The production of the test specimens required for use related tests and the tests themselves were carried out in accordance with the standards indicated in table 8:

Table 8:

| | | | Comparative Example 10 | Comparative Example 11 |
|---|---|---|---|---|
| ASTM D 1003 | HAZE (1 MM) | % | 9,6 | 13,3 |
| ASTM 2457 / D523 | GLOSS (placque 1mm) (60') | % | 137,5 | 124,4 |
| ASTM 2457 / D523 | GLOSS (placque 1mm) 45' | % | 84 | 77,9 |
| ISO 180/1A | IZOD 23˚C /48h | KJ/M2 | 4,3 | 2,5 |
| ISO 180/1A | IZOD 0˚C /48h | KJ/M2 | 2,3 | 1,2 |
| ISO 178 | Flexual Modulus /48h | N/MM2 | 1482 | 1939 |
| ISO 527 | Tensile Modulus /48h | N/MM2 | 1364 | 1857 |
| ISO 527 | Stress at Yield /48h | N/MM2 | 34,5 | 40,3 |
| ISO 527 | Elongation at Yield /48h | % | 9,9 | 7,9 |
| ISO 527 | Stress at Break /48h | N/MM2 | 26,3 | 38,5 |
| ISO 527 | Elongation at Break /48h | % | 734 | 14 |
| ISO 1133 | Melt Flow Rate | g/10min | 7,5 | 146 |
| ISO 3146 | Hc | J/g | -90,9 | -108,6 |
| ISO3146 | Hm | J/g | 92,1 | 108,4 |
| ISO 3146 | Tm | ˚C | 146,1 | 158,1 |
| ISO 3146 | Tc | ˚C | 110,1 | 117,7 |
| | Ethylene content (IR) | % | 2 | 0 (homopolymer) |
| | Xylene solubles | % | 1 | 0,5 |
| | Mn (GPC) | g/mol | n.m. | 52425 |
| | Mw(GPC) | g/mol | n.m. | 120263 |
| | Mw/Mn | | n.m. | 2,3 |
| | Intrinsic viscosity | | n.m. | 0,86 |
| FDA | Hexane extractables, 100 u film | % | n.m. | n.m. |

The isotactic pentades (mmmm) of the polymer of comparative examples 10 and 11 are higher than 95 %. The 2.1 insertions are ≤0.3% and the 1.3 insertions ≤0.1
As can be seen the comparative Example 10 is a Random copolymer with the same melting point as Example 4 but lower MFR. The stiffness of comparative example 10 is lower than the stiffness of Example 4. Comparative Example 11 represents a homopolymer at a high MFR of 146 g/10' at 230˚.C.

**Random copolymers with high MFR.**

The production of random copolymers with Melt flow rates higher than 500 g/10' was done according to examples 1-3, but by using the polymerization conditions reported on table 9.

Table 9:

| Ex | Prepolymerization | First reactor | | | |
|---|---|---|---|---|---|
| | temperature (˚C) | $C_3$ (Kg/h) | $C_2$ (Kg/h) | $H_2$ (ppm (mol)) | temperature (˚C) |
| 12 | 45 | 333 | 4 | 763 | 70 |
| 13 | 45 | 340 | 2 | 728 | 70 |
| 14 | 45 | 340 | 2 | 760 | 70 |

Following MFR values and ethylene contents were measured on the powder
Example 12: MFR 1225 g/10', 2.3 wt.% ethylene content (IR)
Example 13: MFR 1307 g/10', 1.6 wt.% ethylene content (IR)
Example 14 MFR 1670 g/10' 1.3 wt.% ethylene content (IR)

The powder of Example 12, Example 13 and Example 14 was characterized in powder form (table 12):

Table 10:

| | | | Example 12 | Example 13 | Example 14 |
|---|---|---|---|---|---|
| Method | Variable Name | Units | | | |
| ISO1133 | Melt Flow Rate | g/10min | 1100 | 1300 | 1670 |
| ISO3146 | Hc | J/g | -86,3 | -94,8 | -84,5 |
| ISO3146 | Hm | J/g | 90,1 | 99,7 | 82,1 |
| ISO3146 | Tm | deg_C | 139,5 | 146,7 | 145,1 |
| ISO3146 | Tc | deg_C | 92,3 | 97,9 | 101,3 |
| | Intrinsic viscosity | dl/g | 0,57 | 0,55 | 0,49 |
| | Xylene solubles | % | 2,1 | 1,5 | 1,5 |
| | Ethylene content (IR) | wt.% | 2,4 | 1,4 | 1,2 |
| | Mn (GPC) | g/mol | 25134 | 28157 | 25642 |
| | Mw(GPC) | g/mol | 68279 | 70163 | 65037 |
| | Mw/Mn | | 2,7 | 2,5 | 2,5 |
| FDA | Hexane Extractables 100 u film | % | 1,6 | 1,6 | 1 |

The isotactic pentades (mmmm) of the polymer of examples 12-14 are higher than 95 %. The 2.1 insertions are ≤0.3% and the 1.3 insertions ≤0.1

The melt viscosity was determined according ISO 11443 at three different temperatures (200˚C; 230˚C and 250˚C) (table 11 and table 12 for example 12 and example 13).

Table 11

| **Example 12** | | melt viscosity | | | melt viscosity | | | melt viscosity |
|---|---|---|---|---|---|---|---|---|
| | | | | | | | | |
| **200˚C** | | | **230˚C** | | | **250 ˚C** | | |
| **$g_{rc}$ ($s^{-1}$)** | **$t_{app}$ (Pa)** | **$h_{rc}$(Pa*s)** | **$g_{rc}$ ($s^{-1}$)** | **$t_{app}$ (Pa)** | **$h_{rc}$(Pa*s)** | **$g_{rc}$ ($s^{-1}$)** | **$t_{app}$ (Pa)** | **$h_{rc}$(Pa*s)** |
| 66691,9 | 127473,0 | 1,9 | 67604,9 | 98314,6 | 1,5 | 65549,8 | 86101,6 | 1,3 |
| 31439,2 | 94192,7 | 3,0 | 29993,1 | 69919,4 | 2,3 | 28956,9 | 58622.4 | 2,0 |
| 14722,6 | 65797,5 | 4,5 | 13825,8 | 46104,1 | 3,3 | 13412,4 | 37402,3 | 2,8 |
| 6948,4 | 43356,1 | 6,2 | 6596,9 | 28547,9 | 4,3 | 6456,1 | 22441,4 | 3,5 |

(continued)

| **Example 12** | | melt viscosity | | | melt viscosity | | | melt viscosity |
|---|---|---|---|---|---|---|---|---|
| | | | | | | | | |
| **200°C** | | | **230°C** | | | **250 °C** | | |
| **$g_{rc}$ ($s^{-1}$)** | **$t_{app}$ (Pa)** | **$h_{rc}$(Pa*s)** | **$g_{rc}$ ($s^{-1}$)** | **$t_{app}$ (Pa)** | **$h_{rc}$(Pa*s)** | **$g_{rc}$ ($s^{-1}$)** | **$t_{app}$ (Pa)** | **$h_{rc}$(Pa*s)** |
| 3322,6 | 26715,9 | 8,0 | 3216,7 | 16640,2 | 5,2 | 3164,1 | 12518,3 | 4,0 |
| 1610,0 | 15418,9 | 9,6 | 1585,0 | 9159,8 | 5,8 | 1570,4 | 6717,2 | 4,3 |
| 791,4 | 8549,1 | 10,8 | 780,7 | 4732,5 | 6,1 | 783,9 | 3511,2 | 4,5 |
| 388,7 | 4427,2 | 11,4 | 384,7 | 2289,9 | 6,0 | 384,9 | 1679,3 | 4,4 |
| | | | | | | 195,9 | 763,3 | 3,9 |

Table 12:

| **Example 13** | | melt viscosity | | | melt viscosity | | | melt viscosity |
|---|---|---|---|---|---|---|---|---|
| | | | | | | | | |
| **200°C** | | | **230°C** | | | **250 °C** | | |
| **$g_{rc}$ ($s^{-1}$)** | **$t_{app}$ (Pa)** | **$h_{rc}$(Pa*s)** | **$g_{rc}$ ($s^{-1}$)** | **$t_{app}$ (Pa)** | **$h_{rc}$(Pa*s)** | **$g_{rc}$ ($s^{-1}$)** | **$t_{app}$ (Pa)** | **$h_{rc}$(Pa*s)** |
| 73848,6 | 124878,0 | 1,7 | 67351,6 | 98314,6 | 1,5 | 57569,8 | 84727,6 | 1,5 |
| 31963,4 | 92360,8 | 2,9 | 29985,0 | 69919,4 | 2,3 | 27721,6 | 57706,4 | 2,1 |
| 14494,8 | 64576,2 | 4,5 | 13833,2 | 46104,1 | 3,3 | 13463,8 | 36944,3 | 2,7 |
| 6810,7 | 42134.8 | 6,2 | 6599,5 | 28547,9 | 4,3 | 6583,6 | 22136.1 | 3,4 |
| 3285,2 | 25800.0 | 7,9 | 3217,0 | 16640,2 | 5,2 | 3226,1 | 12365,7 | 3,8 |
| 1607,2 | 14808,3 | 9,2 | 1584,8 | 9159,8 | 5,8 | 1595,6 | 6717,2 | 4,2 |
| 793,1 | 8091,1 | 10,2 | 780,5 | 4732,5 | 6,1 | 780,8 | 3358,6 | 4,4 |
| 389,7 | 4121,9 | 10,6 | 384,8 | 2289,9 | 6,0 | 385,3 | 1679,3 | 4,4 |
| 192,9 | 1984,6 | 10,3 | 192,7 | 1221,3 | 6,3 | 196,6 | 763,3 | 3,9 |

## Claims

**1.** Polypropylene resin comprising a propylene copolymer said polypropylene resins is endowed with the following features:

a) a propylene copolymer having a melt flow rate (MFR) (ISO 1133) (230°C/2.16 kg) comprised between 90 and 3000 g/10' measured on the powder;
b) distribution of molecular weight Mw/Mn lower than 4;
c) hexane extractables according FDA regulations of less than 2.6 wt.%,
d) xylene solubles of lass than 2.2 wt.%;
e) isotactic pentads (mmmm) measured with by $^{13}C$-NMR higher than 90%; and
f) a propylene copolymer having melting point measured by DSC is between 135°C and 152°C measured on the powder
g) haze measured according to ASTM D 1003 (1mm placque) comprised between 5% and 30%; and
h) flexural modulus measured according ISO 178 after 48h comprised between 1200 $N/m^2$ and 2500 $N/m^2$.

with the proviso that the propylene copolymer was not visbroken.

2. The polypropylene resin according to claim 1 wherein the copolymer is a propylene copolymer containing up to 5% by mol of ethylene or alpha olefins of formula $CH_2$=CHA derived units, wherein A is a $C_2$-$C_{20}$ alkyl radical.

3. The polypropylene resin according to anyone of claims 1-2 wherein for an MFR value between 90 and 500 g/10' at 230˚C, at a shear rate of 100 1/s at 250˚C the melt viscosity is between 100 Pas and 11 Pas;

4. The polypropylene resins according to anyone of claims 1-3 wherein for an MFR value higher than 500 g/10' at 230˚C have, at a shear rate of 1500 1/s at 250˚C, a viscosity between 11 Pas and 1 Pas:

5. The polypropylene resin according to anyone of claims 1-4 containing from 0.1 to 1% by weight of a nucleating agent.

6. The polypropylene resin according to anyone of claims 1-5 having a melt flow rate (MFR) (ISO 1133) (230˚C/2.16 kg) comprised between 120 and 3000 g/10'.

7. The propylene resin according to anyone of claims 1-6 having the Haze comprised between 5% and 25%.

8. The propylene resin according to anyone of claims 1-7 having the flexural modulus comprised between 1200 $N/m^2$ and 2500 $N/m^2$.

9. Use of the propylene resin described in claim 1-8 for the production of molded articles.

10. Molded article obtained by using the propylene resin of claims 1-8.

## Patentansprüche

1. Polypropylenharz, umfassend ein Propylen-Copolymer, wobei das Polypropylenharz die folgenden Merkmale aufweist:

   a) ein Propylen-Copolymer mit einer am Pulver gemessenen Schmelzflussrate (MFR) (ISO 1133) (230 ˚C/2,16 kg) zwischen 90 und 3000 g/10 min;
   b) eine Verteilung des Molekulargewichts, Mw/Mn, von niedriger als 4;
   c) in Hexan nach den FDA-Bestimmungen extrahierbare Stoffe von weniger als 2,6 Gew.-%,
   d) in Xylen lösliche Stoffe von weniger als 2,2 Gew.-%,
   e) mittels der $^{13}C$-NMR gemessene isotaktische Pentaden (mmmm) von höher als 90 %; und
   f) ein Propylen-Copolymer mit einem mittels der DSK am Pulver gemessenen Schmelzpunkt, der zwischen 135 ˚C und 152 ˚C liegt;
   (g) eine nach ASTM D 1003 (1-mm-Platte) gemessene Trübung, die zwischen 5 % und 30 % liegt; und
   (h) einen nach ISO 178 nach 48 h gemessenen Biegemodul zwischen 1200 $N/m^2$ und 2500 $N/m^2$,

   mit der Maßgabe, dass das Propylen-Copolymer nicht viskositätsgebrochen war.

2. Polypropylenharz nach Anspruch 1, worin das Copolymer ein Propylen-Copolymer mit bis zu 5 Mol-% Ethylen oder $\alpha$-Olefinen von abgeleiteten Einheiten der Formel $CH_2$=CHA ist, worin A ein $C_2$- bis $C_{20}$-Alkylrest ist.

3. Polypropylenharz nach einem der Ansprüche 1 bis 2, worin die Schmelzviskosität für einen MFR-Wert zwischen 90 und 500 g/10 min bei 230 ˚C, bei einer Scherrate von 1001/s bei 250 ˚C, zwischen 100 Pas und 11 Pas liegt;

4. Polypropylenharz nach einem der Ansprüche 1 bis 3, worin die Viskosität für einen MFR-Wert von höher als 500 g/10 min bei 230 ˚C, bei einer Scherrate von 1500 1/s bei 250 ˚C, zwischen 11 Pas und 1 Pas liegt.

5. Polypropylenharz nach einem der Ansprüche 1 bis 4 mit von 0,1 bis 1 Gew.-% eines Keimbildners.

6. Polypropylenharz nach einem der Ansprüche 1 bis 5 mit einer Schmelzflussrate (MFR) (ISO 1133) (230 ˚C/2,16 kg) zwischen 120 und 3000 g/10 min.

7. Propylenharz nach einem der Ansprüche 1 bis 6 mit einer Trübung zwischen 5 % und 25%.

8. Propylenharz nach einem der Ansprüche 1 bis 7 mit einem Biegemodul zwischen 1200 $N/m^2$ und 2500 $N/m^2$.

9. Verwendung des nach den Ansprüchen 1 bis 8 beschriebenen Propylenharzes zur Herstellung von Formteilen.

10. Formteil, das unter Verwendung des Propylenharzes nach den Ansprüchen 1 bis 8 erhalten wird.

## Revendications

1. Résine de polypropylène comprenant un copolymère de propylène, ladite résine de polypropylène étant dotée des caractéristiques suivantes :

   a) un copolymère de propylène présentant un indice de fluidité à chaud (MFR) (ISO 1133) (230˚C/2,16 kg) compris entre 90 et 3000 g/10', mesuré sur la poudre ;
   b) une distribution des poids moléculaires (Mw/Mn) inférieure à 4 ;
   c) des fractions pouvant être extraites à l'hexane conformément aux prescriptions de la FDA inférieures à 2,6% en poids,
   d) des fractions solubles dans le xylène inférieures à 2,2% en poids ;
   e) des pentades isotactiques (mmmm) mesurées par $^{13}C$-RMN supérieures à 90% ; et
   f) un copolymère de propylène présentant un point de fusion mesuré par DSC entre 135˚C et 152˚C mesuré sur la poudre
   g) un voile mesuré selon la norme ASTM D 1003 (plaque 1 mm) compris entre 5% et 30% ; et
   h) un module de flexion mesuré selon la norme ISO 178 après 48 h compris entre 1200 $N/m^2$ et 2500 $N/m^2$

   à condition que le copolymère de propylène ne présente pas de viscoréduction.

2. Résine de polypropylène selon la revendication 1, où le copolymère est un copolymère de propylène contenant jusqu'à 5% en mole d'unités dérivées de l'éthylène ou d'alpha-oléfines de formule $CH_2$=CHA où A représente un radical $C_2$-$C_{20}$-alkyle.

3. Résine de polypropylène selon l'une quelconque des revendications 1-2, où, pour une valeur MFR entre 90 et 500 g/10' à 230˚C, à une vitesse de cisaillement de 100 1/s à 250˚C, la viscosité de la masse fondue est entre 100 Pa.s et 11 Pa.s.

4. Résine de polypropylène selon l'une quelconque des revendications 1-3, où, pour une valeur MFR supérieure à 500 g/10' à 230˚C, à une vitesse de cisaillement de 1500 1/s à 250˚C, la viscosité est entre 11 Pa.s et 1 Pa.s.

5. Résine de polypropylène selon l'une quelconque des revendications 1-4 contenant 0,1 à 1% en poids d'un agent de nucléation.

6. Résine de polypropylène selon l'une quelconque des revendications 1-5, présentant un indice de fluidité à chaud (MFR) (ISO 1133) (230˚C/2,16 kg) compris entre 120 et 3000 g/10'.

7. Résine de propylène selon l'une quelconque des revendications 1-6 présentant un voile compris entre 5% et 25%.

8. Résine de propylène selon l'une quelconque des revendications 1-7 présentant un module de flexion compris entre 1200 $N/m^2$ et 2500 $N/m^2$.

9. Utilisation de la résine de propylène décrite dans les revendications 1-8 pour la production d'objets moulés.

10. Objet moulé obtenu en utilisant la résine de propylène selon les revendications 1-8.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 0244260 A
- WO 9921899 A
- WO 0121674 A
- WO 9102012 A
- WO 9200333 A
- WO 0162764 A
- DE 19962814 A
- DE 19962910 A
- WO 04005360 A
- WO 02102811 A
- EP 633272 A
- WO 9532995 A
- EP 2004007061 W
- US 20030149199 A


### Non-patent literature cited in the description


- **Gächter ; Müller.** Plastics Additives Handbook. Hansa Publishers, 1993
- **L. Resconi ; L. Cavallo ; A. Fait ; F. Piemontesi.** Selectivity in Propylene Polymerization with Metallocene Catalysts. *Chem. Rev.,* 2000, vol. 100, 1253